# EUROPEAN PATENT APPLICATION

(11) **EP 1 995 030 A2**
(43) Date of publication of application: **26.11.2008**
(21) Application number: 08102681.7
(22) Date of filing: 17.03.2008
(51) Int. Cl.: B29C 33/40, B29C 33/60, B28B 7/34, B28B 7/36

(54) **Modular mould, in particular for artificial stone**

(30) Priority: 30.03.2007 IT RM20070172
(71) Applicant: M.E.RIN S.r.l., 00155 Roma (IT)
(72) Inventor: Giambartolomei, Enzo, 00155 Rome (IT)
(74) Representative: Leone, Mario

(57) **Abstract**

A modular mould (1) is easy to be manufactured and allows the separation between the structural members thereof before unblocking the molded slab or article, and comprises: a plate shaped lid (9); a supporting member (2), in stiff or flexible material, having a cavity (3); and a mould member (5), removably connected to said supporting member (2) through mechanical means inside said cavity (3), made of rubber based flexible material charged with a non sticking agent, defining a pattern cavity (8).

## Description

The present invention is related to a modular mould, particularly but not exclusively of the kind usable for the manufacturing of slabs in artificial stone or of slabs or articles manufactured by casting in a mould of a mixture to be cured, e.g. by means of baking.

For artificial stone it is understood a composition of a resin and a mineral powder, e.g. marble, granite or any other kind of stone, according to predetermined proportions, e.g. 5% of resin, subject to a baking of the mixture to obtain a slab resembling a natural stone but which can be subsequently worked and finished to produce, for instance, kitchen tops, building tiles etc.

Moulds made of rubber based flexible material are known, suitable to be put in a baking oven and subsequently to be taken off from the baked slab. However, to ease the release of the molded slab, a releasing agent, e.g. polyvinylic alcohol, is sprayed on the moulds before the mixture casting.

To overcome the demand of spraying such agent every time, it has been proposed, in the patent application No. PCT/EP2005/056383, a mould having a layered structure wherein the layer contacting the mixture is composed by a kind of rubber equal to the layer below, but mixed with a non sticking agent, particularly a charge of PTFE.

This expedient can ease the release but, considering that such moulds are subject to wear and tear and anyway they must be replaced with new ones, they turn out considerably expensive and also of difficult manufacturing.

The technical problem underlying the present invention is to provide a mould obviating the drawbacks cited with reference to the prior art.

Such problem is solved by a mould as above specified, comprising:
* a plate shaped lid;
* a supporting member, in stiff or flexible material, having a cavity; and
* a mould member, removably connected to said supporting member through mechanical means inside said cavity, made of rubber based flexible material charged with a non sticking agent.

The main advantage of the above defined mould lies in being of easy manufacturing and in allowing the separation between the supporting member and the mould member, thus permitting the replacement of the latter when it is worn out, without the needing of completely replacing all the mould.

Further, the supporting member can receive heating means which could even render unnecessary the use of a baking oven.

Advantageously, such mould may require the use of a plate shaped lid in rubber based flexible material, possibly charged with a non sticking agent.

A suitable rubber for the manufacturing of the above defined mould is the EPDM (ethylene propylene diene monomer rubber) and a suitable non sticking agent is PTFE (polytetrafluoroethylene) or another fluoropolymer. The rubber may be also EPM or another suitable elastomer.

The present invention will be detailed hereinafter with reference to a preferred embodiment thereof, provided to an exemplificative and non limitative purpose in connection with the annexed drawings wherein:

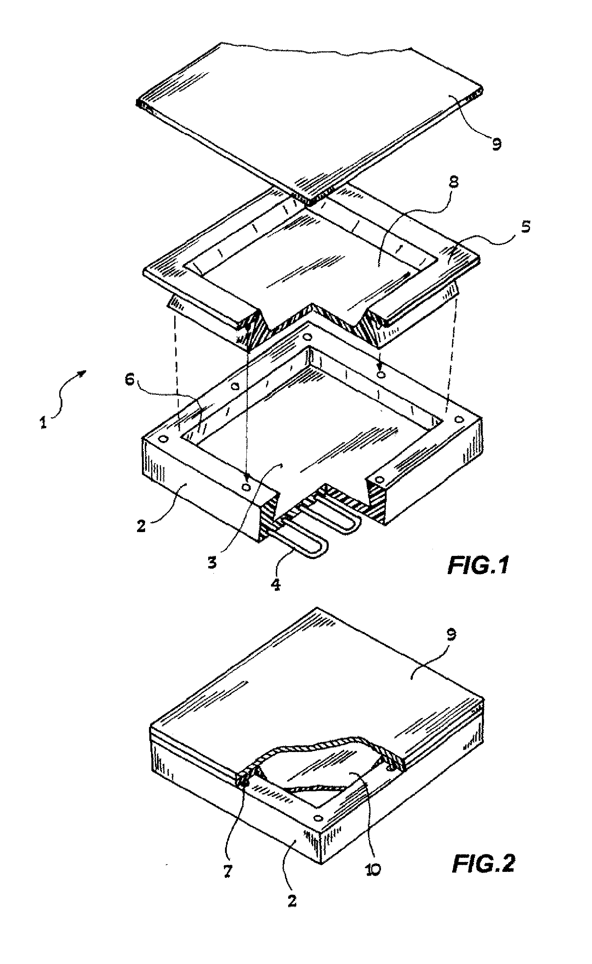

* Figure 1 shows a perspective and exploded view of a mould according to the invention;
* Figure 2 shows a partially sectioned perspective view of the mould of Figure 1;

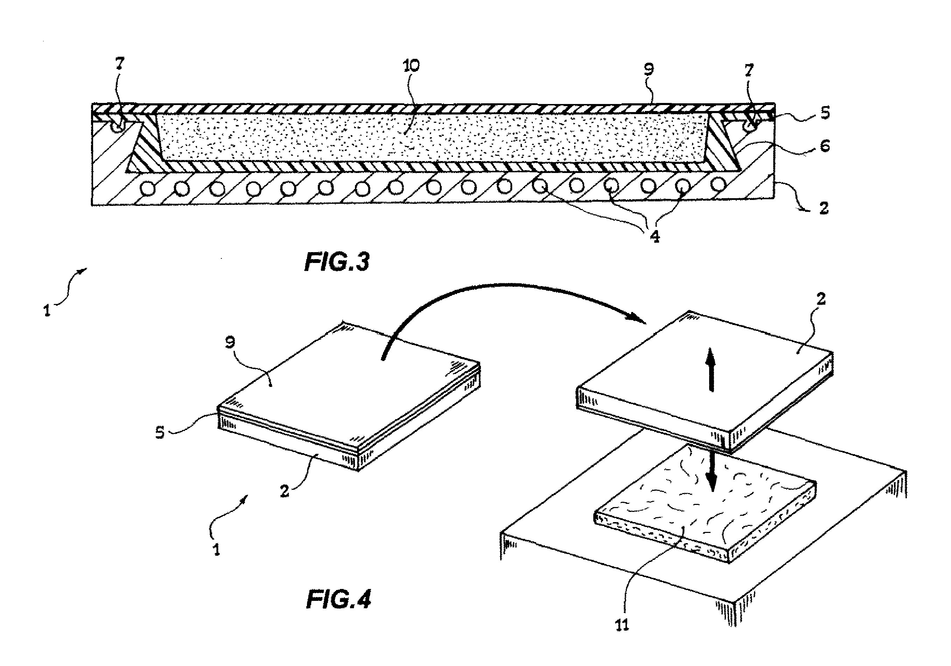

* Figure 3 shows a cross-sectional view of the mould of Figure 1; and
* Figure 4 illustrates the use of the mould of Figure 1.

With reference to the drawings, a mould which can be used for instance for the manufacturing of artificial stone is generally indicated as 1.

It comprises a supporting member 2, made of stiff or flexible material, substantially flattened, having a cavity 3 at the extended face thereof.

Such supporting member 2 can be made of flexible material, like rubber, or even stiff, like e.g. plastic reinforced by incorporated fiberglass, cement, ceramic material or metal as well, e.g. aluminium. The supporting member 2 in flexible material allows a greater handiness and a more comfortable use, while a stiff supporting member 2 provides the mould with greater mechanical stability.

A particularly promising material for the manufacture of stiff supporting members is a phosphoric ceramic material chemically bonded (Chemically Bonded Phosphate Ceramics - CBPC), in particular known in the art with the trade name of Vubonite^{®}, for the easiness in the use thereof, also for obtaining complex shapes.

In this latter case, the supporting member can in particular show a high temperature resistance to 1000 °C, without cracks or deformations.

If the supporting member 2 is made of rubber based material, like EPDM or EPM, it can be reinforced by one or more textile layers, e.g. made of rayon, polyester, nylon, aramid fibers, or in particular glass fibers.

According to the present preferred embodiment, the supporting member 2 incorporates heating means which can be realized, as per the current embodiment, by a coil 4 embedded in the thickness of the supporting member 2 and run by a heating fluid, e.g. diathermic oil.

Said heating means can also comprise electrical thermistors connected to an external electric supply.

The mould 1 has further a mould member 5 which is flexible and which is removably associated to said supporting member 2, generally by mechanical means at said cavity 3.

Advantageously, said mould member 5 is made of rubber based flexible material, like EPDM or EPM, charged with a non sticking agent, e.g. a fluoropolymer like the PTFE, according to an appropriate charge ratio. In case, said mould member 5 can be reinforced by one or more textile layers, e.g. made of rayon, polyester, nylon, aramid fibers, or in particular glass fibers.

Said mechanical means may include different items. For instance, they can comprise a mechanical joint between the supporting member and the mould member. To this purpose, the cavity 3 of the supporting member 2 is provided with an edge undercut 6 in which the mould member 5 is framed.

However, being flexible and non sticking, the mould member 5 can be easily unblocked from the undercut, and replaced with a new mould member.

According to a variant, shown in the drawings, the joints are pin-and-socket type joints, indicated as 7, or embodied by a peripheral groove-and-tongue joint.

However, it is understood that the two supporting and mould members 2, 5 can be reciprocally bound by any appropriate mechanical means, like screw fasteners, clams and so on.

The mould member 5 has in turn a pattern cavity 8 which can be slightly countersunk, to ease the extraction of the slab or of the manufactured article.

Finally, the mould 1 has a plate-shaped lid 9, preferably made of rubber based flexible material, like EPDM or EPM, possibly charged with a non sticking agent, e.g. a fluoropolymer like the PTFE, according to an appropriate charge ratio. In case, said mould member 5 can be reinforced by one or more textile layers, e.g. made of rayon, polyester, nylon, aramid fibers, or in particular glass fibers.

The lid 9 may particularly have the same composition of the mould member 5, and it can have any means to be linked to the latter.

In particular, a linking system is preferred allowing the compacting of the mixture inside the pattern cavity 8. Such system can advantageously be provided with vacuum suction means at said pattern cavity 8 and, to this purpose, canalizations 12 may be provided between mould member 5 and lid 9, formed on the periphery of the mould member 5, opened inside the cavity 8 and connected to a vacuum pipe 13 arranged e.g. on the exposed surface f the lid 9, which can be in turn connected to conventional vacuum systems.

For the manufacturing of slabs in artificial stone or similar articles in analogous material, the pattern cavity 8 is filled up with a suitable mixture 10, the lid 9 is placed and the mould 1 is vibrated for obtaining a uniform distribution of the mixture itself. Then, by virtue of the vacuum application to the cavity 8, air is extracted from the inside of the mould 1, causing the adherence of the lid 9 and the compacting of the mixture.

The mould 1 is hence heated at a appropriate temperature and for a suitable length of time, and the cooled down. After, the unfinished slab 11 is extracted from the mould.

To the above disclosed mould a man skilled in the art, to meet further and different needs, may introduce additional change and variants, in any case all falling within the protection scope of the present invention, as defined by the annexed claims.

## Claims

1. Modular mould (1), comprising:
• a plate shaped lid (9);
• a supporting member (2), in stiff or flexible material, having a cavity (3); and
• a mould member (5), removably connected to said supporting member (2) through mechanical means inside said cavity (3), made of rubber based flexible material charged with a non sticking agent, defining a pattern cavity (8).

2. Mould (1) according to claim 1, wherein the supporting member (2) is made of stiff material.

3. Mould (1) according to claim 2, wherein the supporting member (2) is made of plastic reinforced by incorporated fiberglass, cement, ceramic material or metal.

4. Mould (1) according to claim 1, wherein the supporting member (2) is made of flexible material, in particular a rubber based material.

5. Mould (1) according to claim 4, wherein the supporting member (2) is made of EPDM or EPM.

6. Mould (1) according to claim 4 or 5, wherein the supporting member (2) is reinforced by one or more textile layers.

7. Mould (1) according to claim 6, wherein said textile layers are made of rayon, polyester, nylon, aramid fibers, or in particular glass fibers.

8. Mould (1) according to any one of the preceding claims, wherein the supporting member (2) incorporates heating means (4).

9. Mould (1) according to claim 1, wherein the lid (9) is made of a rubber based flexible material, possibly charged with a non sticking agent.

10. Mould (1) according to claim 9, wherein the lid (9) is made of EPDM or EPM.

11. Mould (1) according to claim 9 or 10, wherein the lid (9) is reinforced by one or more textile layers.

12. Mould (1) according to claim 11, wherein said textile layers are made of rayon, polyester, nylon, aramid fibers, or in particular glass fibers.

13. Mould (1) according to claim 1, wherein the mould member (5) is made of EPDM or EPM.

14. Mould (1) according to claim 1 or 13, wherein the mould member (5) is reinforced by one or more textile layers.

15. Mould (1) according to claim 14, wherein said textile layers are made of rayon, polyester, nylon, aramid fibers, or in particular glass fibers.

16. Mould (1) according to claim 1, wherein said non sticking agent is a fluoropolymer, in particular PTFE.

17. Mould (1) according to claim 3, wherein the supporting member (2) is made of chemically bonded phosphoric ceramic material.

18. Mould (1) according to claim 17, wherein the supporting member (2) is made of Vubonite^{®}.

19. Mould (1) according to claim 8, wherein said heating means comprises a coil (4) embedded in the thickness of the supporting member (2) and run by a heating fluid.

20. Mould (1) according to claim 8, wherein said heating means comprises electrical thermistors embedded in the thickness of the supporting member (2).

21. Mould (1) according to claim 1, wherein said mechanical means comprises mechanical joint between the supporting member (2) and the mould member (5).

22. Mould (1) according to claim 21, wherein the cavity (3) of the supporting member (2) is provided with an edge undercut (6) in which the mould member (5) is framed.

23. Mould (1) according to claim 21 or 22, wherein said mechanical joint is a pin-and-socket type joint (7).

24. Mould (1) according to claim 21 or 22, wherein said mechanical joint comprises a peripheral groove-and-tongue joint.

25. Mould (1) according to claim 1, wherein said pattern cavity (8) is slightly countersunk.

26. Mould (1) according to claim 1, comprising vacuum suction means between the lid (9) and the mould member (5).

27. Mould (1) according to claim 26, wherein the vacuum suction means comprises canalizations (12) opened inside the cavity (8) and connected to a vacuum pipe (13) apt to be connected to a vacuum systems.
